# EUROPÄISCHE PATENTSCHRIFT

(11) **EP 1 037 454 B1**
(45) Veröffentlichungstag und Bekanntmachung des Hinweises auf die Patenterteilung: **02.08.2006**
(21) Anmeldenummer: 00104355.3
(22) Anmeldetag: 02.03.2000
(51) Int. Cl.: H04M 3/533, H04M 3/537

(54) **Telekommunikationsanlage zur Anzeige von Post und Verfahren zum Betrieb der Anlage**
Telecommunications device for mail notification and method of operation
Dispositif de télécommunications pour notification de courrier et procédé d'opération

(30) Priorität: 16.03.1999 DE 19911694
(43) Veröffentlichungstag der Anmeldung: 20.09.2000
(73) Patentinhaber: SIEMENS AKTIENGESELLSCHAFT, 80333 München (DE)
(72) Erfinder: Neuhaus, Ralf, 44534 Lünen (DE); Henniger, Andreas, 45239 Essen (DE); Sablewski, Uwe, 33335 Gütersloh (DE); Ide, Hans-Dieter,Dr., 44287 Dortmund (DE); Geck, Bertram, 58239 Schwerte (DE)

(56) Entgegenhaltungen:
- WO-A-98/32273
- WO-A-98/48560

## Beschreibung

Die Erfindung betrifft eine Telekommunikationsanlage mit mindestens einem Anschluss an mindestens ein externes Telekommunikationsnetz und mehreren mittelbar oder unmittelbar untereinander verbundenen, internen Telekommunikationsendgeräten, die zumindest teilweise über eine einzeilige oder mehrzeilige Anzeigevorrichtung zumindest für geschriebenen Text verfügen, mit einer Einwahlvorrichtung in das mindestens eine externe Telekommunikationsnetz und mindestens einer Recheneinheit mit mindestens einem Datenspeicher. Weiterhin betrifft die Erfindung ein entsprechendes Verfahren zum Betrieb der erfindungsgemässen Telekommunikationsanlage.

Ähnliche Telekommunikationsanlagen und Verfahren zum Betrieb von Telekommunikationsanlagen sind im Stand der Technik hinlänglich bekannt. Beispielhaft wird auf die Anmeldungen der Anmelderin mit den Aktenzeichen DE 196 29 055 und EP 06 22 968 hingewiesen. Beide Anmeldungen offenbaren eine Telekommunikationsanlage mit einem Anschluss an ein externes Telekommunikationsnetz und untereinander verbundene, interne Telekommunikationsendgeräte sowie eine Einwahlvorrichtung in das externe Telekommunikationsnetz mit einer Recheneinheit, die Datenspeicher aufweist. Weiterhin ist aus der EP 05 89 248 bekannt, dass die internen Telekommunikationsendgeräte einer Telekommunikationsanlage mit Anzeigevorrichtungen, sogenannten Displays ausgestattet sind.

Ein Nachteil dieser bekannten Telekommunikationsanlagen liegt darin, dass das Benutzungsspektrum dieser Anlagen im wesentlichen auf die Sprachkommunikation innerhalb der Telekommunikationsanlage beziehungsweise innerhalb des Telekommunikationsnetzes beschränkt ist. Möchte man beispielsweise am Fax-Datenverkehr teilnehmen, so benötigt man ein separates Faxgerät, entweder in Form eines Gerätes, das eine geschriebene Nachricht abtastet und an ein entsprechendes Gegengerät weiterleitet, oder einen an die Telekommunikationsanlage angeschlossenen Computer, über den das Versenden oder Empfangen von Faxen direkt möglich ist. Ebenso besteht auch keine Möglichkeit, an dem immer populärer werdenden Diensten des weltweiten Internets teilzunehmen und hierüber Nachrichten zu empfangen beziehungsweise zu versenden.

Aus WO 96/32273 ist ein sogenannter "Grabbing Server" bekannt, der selbständig eine Verbindung zu einem Mailserver aufbaut und beispielsweise mittels des POP3-Protokolls zumindest einen Teil der E-mail eines Teilnehmers abholt. Mittels eines sogenannten "Notification Server" wird dann der Teilnehmer vom Vorliegen einer Nachricht informiert indem beispielsweise am Telefon des Teilnehmer ein Klingelzeichen erzeugt wird.

Es ist daher Aufgabe der Erfindung eine Telekommunikationsanlage zu beschreiben, welche entsprechende Mittel in die Telekommunikationsanlage integriert und dabei insbesondere sicherstellt, dass nur ein berechtigter Teilnehmer seine E-mail erhält.

Ebenfalls soll ein entsprechendes Verfahren zum Betrieb der Telekommunikationsanlage angegeben werden.

Die Erfinder haben erkannt, dass es möglich ist, ein Telekommunikationssystem derart auszugestalten, dass dieses mit einem Mailserver kommunizieren kann, der mit dem Internet verbunden ist und auf diese Weise dort niedergelegte E-Mails den Teilnehmern der Telekommunikationsanlage - zumindest teilweise - zur Einsicht zur Verfügung stellen kann.

Hierzu baut das Telekommunikationssystem von sich aus in zyklischen beziehungsweise administrierbaren Abständen eine Datenverbindung zu einem Mailserver über ein PPP-Protokoll auf. Das Telekommunikationssystem identifiziert sich als Client des Mailservers und fragt neu eingegangene Nachrichten für den Telekommunikationssystem-Teilnehmer ab. Hierbei wird die Anzahl und jeweils der Header beziehungsweise die ersten Zeilen als Mailvorschau übernommen. Zur Identifikation wird die Kennung eines einzelnen Teilnehmers benutzt, der einen Account auf dem betrachteten Mailserver besitzt.

Beim Vorliegen von Nachrichten werden diese als "empfangene Infos" am systemspezifischen Telefon des Teilnehmers signalisiert beziehungsweise angezeigt. Der Teilnehmer hat nun die Möglichkeit direkt am Telefon weitere Infos zu den einzelnen Nachrichten abzufragen, wie beispielsweise den Mailabsender, den Betreff oder die Mailvorschau. Eine komplette Abfrage vorliegender E-Mails erfolgt anschliessend über eine normale Online-Verbindung über einen PersonalComputer.

Zusätzlich besteht auch die Möglichkeit, in einer Session, das heisst in einer einmaligen Datenverbindung zwischen der Telekommunikationsanlage und dem Mailserver, die Maildaten für mehrere Teilnehmer in der Telekommunikationsanlage abzufragen und anschliessend vorhandene Nachrichten gezielt an die einzelnen Teilnehmer zu verteilen.

Durch eine derartige Ausgestaltung des Telekommunikationssystems können zentral für mehrere Teilnehmer vorliegende Mails auf einem externen Mailserver abgefragt werden, wodurch erhebliche Verbindungskosten gespart werden, da sonst jeder einzelne Teilnehmer entsprechende Nachfrageverbindungen mit dem externen Mailserver aufbauen müsste.

Entsprechend dem Hauptgedanken der Erfindung, wonach eine Umsetzung zwischen dem internetspezifischen Protokoll in eine Signalisierung von Nachrichten an einem Telekommunikationsendgerät eines Telekommunikationssystems stattfindet, schlägt der Erfinder zur Lösung der Aufgabe vor, eine Telekommunikationsanlage mit mindestens einem Anschluss an mindestens ein externes Telekommunikationsnetz und mehreren mittelbar oder unmittelbar untereinander verbundenen internen Telekommunikationsendgeräten, die zumindest teilweise über eine einzeilige oder mehrzeilige Anzeigevorrichtung, zumindest für geschriebenen Text, verfügen, weiterhin mit einer Einwahlvorrichtung in das mindestens eine externe Telekommunikationsnetz und mindestens einer Recheneinheit mit mindestens einem Datenspeicher, dahingehend weiterzuentwickeln, dass in der Telekommunikationsanlage Mittel vorgesehen sind, die selbständig eine Verbindung zu einem, mit dem mindestens einen externen Telekommunikationsnetz verbundenen, Mailserver aufbauen, danach abfragen, ob eine E-mail für mindestens einen Teilnehmer vorliegt und im Fall des Vorliegens zumindest einen Teil des Inhalts der E-mail abholen, dem Teilnehmer, dessen E-mail vorliegt, vom Vorliegen der E-mail benachrichtigen und gegebenenfalls den abgeholten Teil der E-mail(s) auf dem Display mindestens eines Telekommunikationsendgerätes anzeigen.

Vorzugsweise werden die oben genannten Mittel zum selbständigen Verbindungsaufbau, zur Mailserver-Abfrage und Abholung der E-mail durch eine entsprechende Programmierung eines speziellen Mikroprozessors innerhalb der Telekommunikationsanlage oder des Hauptrechners der Telekommunikationsanlage oder eines Mikroprozessors eines Telekommunikationsendgerätes verwirklicht. Allerdings liegt auch eine - allerdings wesentlich aufwendigere - rein schaltungstechnische Lösung im Bereich der Erfindung.

Entsprechend dem Anspruch 1 ist vorgesehen, dass der Datenspeicher eine Liste mit Teilnehmern, ihrer zugehörigen Kennungen und gegebenenfalls ihren Passwörtern zur Abholung der E-mail vom Mailserver aufweist. Durch diese Liste ist es möglich, nicht nur eine einzige Nachricht bei einem einzigen Mailserver abzuholen, sondern die E-mails für alle in der Liste eingetragenen Teilnehmer abzufragen.

Ausserdem ist in der Teilnehmerliste zusätzlich eine, den einzelnen Teilnehmern zugeordnete Telekommunikationsendgeräte-Kennung zugeordnet und die Benachrichtigung über das Vorliegen einer E-Mail für diesen Teilnehmer wird ausschliesslich an das Telekommunikationsendgerät mit dieser Telekommunikationsendgeräte-Kennung vorgenommen. Hierdurch wird sichergestellt, dass auch tatsächlich nur der richtige Adressat seine E-mail erhält.

Eine weitere vorteilhafte Ausgestaltung sieht vor, dass die Teilnehmerliste zusätzlich den einzelnen Teilnehmern zugeordnete Kennungen von Mailservern enthält. Hierdurch wird es möglich nicht nur bei einem einzigen vorgegebenen Mailserver die entsprechende E-mails der Teilnehmer abzuholen, sondern gezielt für bestimmte Teilnehmer bei einem oder mehreren verschiedenen Mailservern E-mails abzufragen.

Entsprechend dem momentanen Internet-Standard ist es vorteilhaft, wenn die Verbindung zwischen Telekommunikationsanlage und Mailserver nach einem PPP (peer to peer protokoll = Punkt zu Punkt-Protokoll) über ISDN entspricht, die Datenübertragung dem TCP/IP (Internet-Protokoll für den Aufbau von Paketverbindungen zu Datenservern) entspricht und die Mailabfrage dem POP3 (post office protocol version 3 = Protokoll nach Internetstandard RFC1939) entspricht.

Eine weitere vorteilhafte Ausgestaltung der Telekommunikationsanlage besteht darin, dass für die Mailabfrage ein periodisches, vorgegebenes Zeitraster vorgesehen ist. Hierdurch wird sichergestellt, dass in regelmässigen Abständen die Abfrage nach eventuell vorliegenden E-mails vorgenommen wird. Durch dieses vorgegebene Zeitraster besteht beispielsweise die Möglichkeit, die Abfragefrequenz so zu gestalten, dass zu normalen Arbeitszeiten eine relativ hohe Abfragefrequenz von einer halben Stunde oder kürzer vorgenommen wird, während zu arbeitsfreien Zeiten eine niedrige Abfragefrequenz mit mehreren Stunden Abstand zwischen den einzelnen Mailabfragen eingestellt wird.

Entsprechend einer besonderen Ausgestaltung der Erfindung kann vorgesehen werden, dass der an die Telekommunikationsanlage übertragene Teil der E-Mail den Header (Kopfzeilen) der E-mail mit mindestens dem E-Mailabsender, dem Betreff und einer Mailvorschau, bestehend aus einigen Anfangszeilen der E-mail, enthält. Hierdurch kann der Teilnehmer schon bei der ersten Formation erkennen, von wem die Nachricht an ihn versandt wurde, worum es geht und auch die Anfangszeilen lesen. Besteht die E-mail aus einem sehr kurzen Text, so kann auch die komplette E-mail über die Telekommunikationsanlage gelesen werden.

Vorteilhaft kann das Mittel zum selbständigen Verbindungsaufbau mit dem Mailserver beispielsweise in einem Telekommunikationsendgerät der Telekommunikationsanlage integriert werden oder auch in der Einmalvorrichtung der Telekommunikationsanlage, also der Zentrale der Telekommunikationsanlage, integriert werden.

Entsprechend dem Erfindungsgedanken schlagen die Erfinder auch ein Verfahren zum Betrieb einer Telekommunikationsanlage vor, wobei neben den Verbindungs- und Wählfunktionen die folgenden Merkmale vorgesehen sind:
selbständiger Aufbau einer Verbindung über ein externes Telekommunikationsnetz mit einem Mailserver,
Abfrage, ob eine E-mail für mindestens einen Teilnehmer vorliegt und im Fall des Vorliegens Abholung zumindest eines Teils des Inhalts einer oder mehrerer E-mail,
Benachrichtigung des Teilnehmers, dessen E-mail vorliegt, über ein Telekommunikationsendgerät und gegebenenfalls
Anzeige des abgeholten Teils der einen oder mehrerer E-mail auf dem Display mindestens eines Telekommunikationsendgerätes,
wobei in einem Datenspeicher der Telekommunikationsanlage eine Liste mit Teilnehmern, ihrer zugehörigen Kennung und gegebenenfalls deren Passwörtern angelegt ist und die Abfrage beim Mailserver für die in der Liste aufgenommenen Teilnehmer durchgeführt wird,

Durch diese Zentralisierung der E-mail-Abfrage können sich in einem grösseren Betrieb die Telekommunikationsgebühren aufgrund von E-mail-Abfragen erheblich reduzieren.

Gemäss Anspruch 8 wird in der Teilnehmerliste zusätzlich eine, den einzelnen Teilnehmern zugeordnete Telekommunikationsendgeräte-Kennung geführt und die Benachrichtigung über das Vorliegen einer E-Mail wird für diesen Teilnehmer ausschliesslich an das Telekommunikationsendgerät mit dieser Telekommunikationsendgeräte-Kennung vorgenommen. Hierdurch wird sichergestellt, dass auch tatsächlich nur der richtige Adressat seine E-mail erhält.

Wird in der Teilnehmerliste zusätzlich den einzelnen Teilnehmern eine Kennung von zugeordneten Mailservern aufgeführt, so kann die Abfrage auch teilnehmerspezifisch bei unterschiedlichen Mailservern erfolgen. Durch diese Ausgestaltung besteht die Möglichkeit einem Teilnehmer mehrere Mailserver zuzuordnen oder unterschiedlichen Teilnehmern unterschiedliche Mailserver zuzuordnen, wodurch sich eine wesentliche Flexibilisierung des System ergibt. Zur Durchführung der Abfrage bei mehreren Mailservern wird die Telekommunikationsanlage vorteilhaft die Liste zunächst nach Mailservern sortieren beziehungsweise durchsehen und gebündelt nach E-mails für die Teilnehmer der jeweiligen Mailserver nachfragen.

Zusätzlich besteht auch noch die Möglichkeit vor der Anzeige der entsprechenden E-mail ein entsprechendes Passwort abzufragen, so dass sichergestellt ist, dass die E-mail nur an autorisierte Teilnehmer weitergegeben wird.

Entsprechend dem derzeitigen Internetstandard ist es vorteilhaft, wenn die Verbindung zwischen der Telekommunikationsanlage und dem Mailserver nach einem PPP (peer to peer protokoll = Punkt zu Punkt-Protokoll) über ISDN aufgebaut wird, die Datenübertragung dem TCP/IP (Internet-Protokoll für den Aufbau von Paketverbindungen zu Datenservern) durchgeführt wird und die Mailabfrage interaktiv nach dem POP3 (post office protocol version 3 = Protokoll nach Internetstandard RFC1939) durchgeführt wird.

Durch eine Vorgabe der Mailabfrage nach einem periodischen Zeitraster besteht die Möglichkeit, die Abfragefrequenz entsprechend den Anforderungen, beispielsweise an hochfrequentierte Betriebszeiten und nur geringfrequentierte Freizeiten, anzupassen.

Vorteilhaft ist es auch, wenn bei der Mailabfrage der an die Telekommunikationsanlage übertragene Teil der E-Mail den Header mit mindestens Mailabsender, Betreff und Mailvorschau enthält.

Eine weitere vorteilhafte Ausgestaltung des Verfahrens sieht vor, dass der selbständige Verbindungsaufbau mit dem Mailserver entweder durch ein Telekommunikationsendgerät der Telekommunikationsanlage ausgelöst wird oder auch durch eine Zentralstelle der Telekommunikationsanlage ausgelöst wird.

Die Benachrichtigung des Teilnehmers kann vorteilhaft auch auf akustische oder optische Weise, zum Beispiel durch einen Signalton oder Aufleuchten einer Lampe oder LED am Telekommunikationsendgerät, signalisiert werden.

Weitere Merkmale und Vorteile der Erfindung ergeben sich aus der nachfolgenden Beschreibung eines bevorzugten Ausführungsbeispiels unter Bezugnahme auf die Zeichnungen.

Ein besonders bevorzugtes Ausführungsbeispiel der Erfindung wird nachstehend unter Bezugnahme auf die Zeichnung näher erläutert. Es zeigen im einzelnen:
Figur 1; Schematische Übersicht einer Telekommunikationsanlage mit Verbindung zu einem Mailserver im Internet;
Figur 2: Beispiel für den Meldungsablauf zwischen einer Telekommunikationsanlage und einem Mailserver.

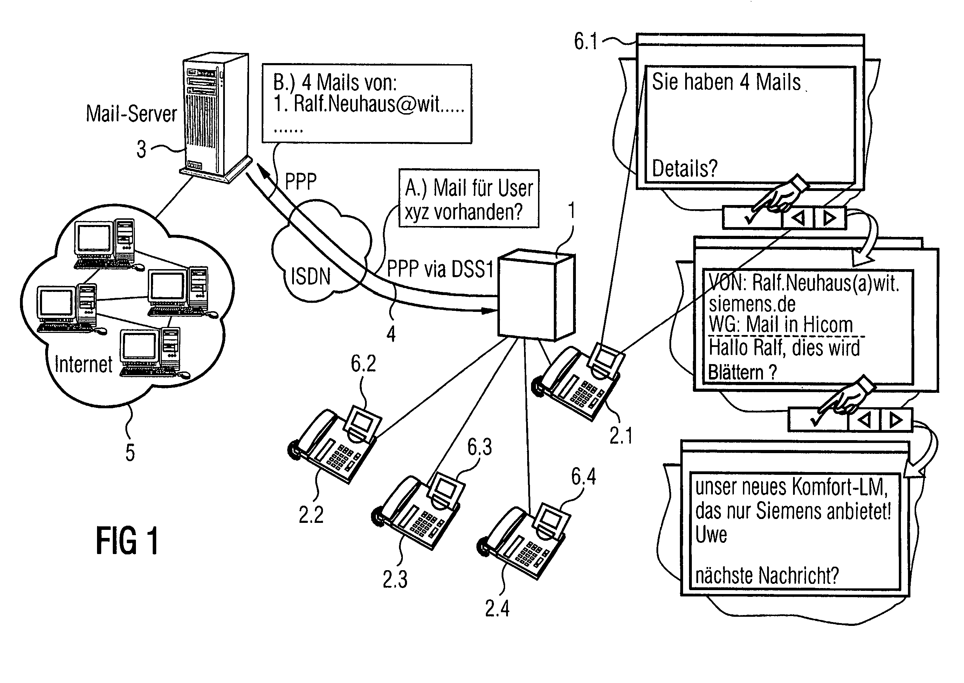

Die Figur 1 zeigt beispielhaft eine erfindungsgemäße Telekommunikationsanlage bestehend aus einer Zentraleinheit 1 und mehreren Telekommunikationsendgeräten 2.1 bis 2.4 mit Displays 6.1 bis 6.4, die mit der Zentraleinheit verbunden sind. Nicht dargestellt sind mögliche Verbindungen zu Telekommunikationsendgeräten über Funk oder sonstige drahtlose Verbindungen, obwohl diese ebenfalls möglich sind und im Rahmen der Erfindung liegen.

Die Telekommunikationsanlage steht durch die Zentraleinheit 1 über eine ISDN-Verbindung 4 mit einem Mailserver 3, der wiederum an das Internet 5 angeschlossen ist, in Verbindung. Die Darstellung zeigt wie die Telekommunikationsanlage über ein PPP mit dem Mailserver 3 eine Mailabfrage vornimmt und nachfragt, ob für den Teilnehmer (User) xyz eine E-mail vorhanden ist. Da vier E-mails vorliegen, werden diese auf die Zentraleinheit 1 entsprechend den Internet-Protokollen übertragen und in der Zentraleinheit auf das telekommunikationsanlagenspezifische Format umgewandelt und an das entsprechende Telekommunikationsendgerät, hier das Endgerät 2.1, übertragen beziehungsweise zunächst nur deren Vorhandensein signalisiert. Der Teilnehmer sieht auf seinem Display, daß vier Mails zur Verfügung stehen und kann sich über sinnfällige Tastenbetätigung die einzelnen Mails anzeigen lassen und in ihnen blättern.

Auf gleiche Weise verfährt das Telekommunikationssystem mit allen abgeholten Nachrichten und verteilt die Nachrichten an die entsprechenden in seiner Teilnehmerliste aufgeführten Telekommunikationsendgeräte.

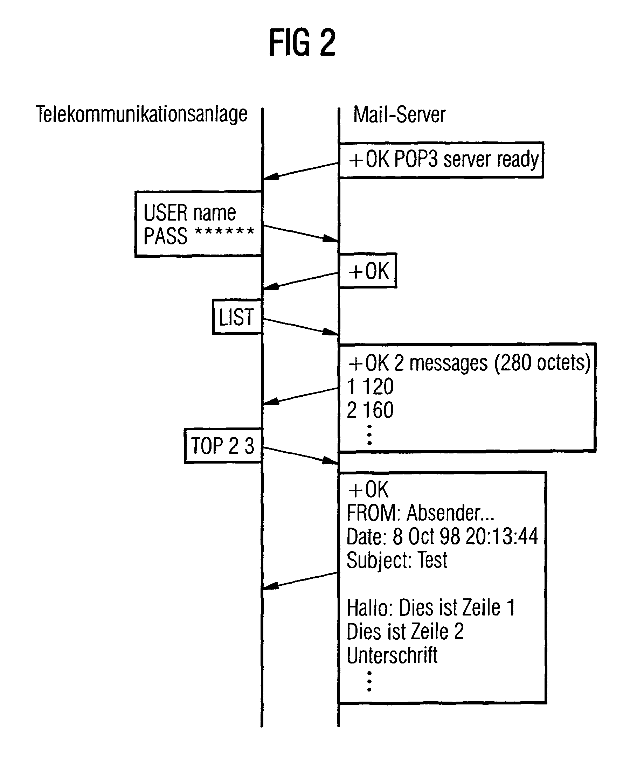

Die Figur 2 zeigt ein Beispiel für den Meldungsablauf zwischen einer Telekommunikationsanlage und einem Mailserver zur Abfrage von eventuell vorhandenen E-mails und einer anschließenden Übertragung der E-mails.

Die Abholung der E-mail selbst über die Zentraleinheit der Telekommunikationsanlage erfolgt über eine POP3-Verbindung. Dieses Post Office Protocol basiert auf dem Austausch von 7-bit ASCII-Zeichenfolgen zwischen Mail-Client und POP3-Server. Jedes Kommando besteht aus einem case-sensitiven Schlüsselwort (3-4 Zeichen: **APOP, DELE, LIST, NOOP, PASS, QUIT, RETR, RSET, STAT, TOP, UIDL, USER),** gefolgt von Argumenten mit jeweils bis zu 40 Zeichen. Der Abschluß eines Kommandos erfolgt durch die Zeichen CR/LF (CarriageReturn + LineFeed).

Die Antworten eines Servers können bis zu 512 Zeichen lang sein und werden ebenfalls durch CR/LF terminiert. Der Abschluß einer Server-Antwort erfolgt durch die Zeichenkette ".CR/LF" (ASCII-dezimal: 46/13/10). Seitens des Servers werden die Antworten mit den Statusindikatoren **"+OK"** oder **"-ERR"** eingeleitet.

Nach dem Start einer POP3-Session antwortet der Server im Gutfall zum Beispiel mit folgender Meldung: **"+OK POP3 server ready"** und wechselt in den **"Authorization state".**

In diesem Status erwartet der Server eine Identifizierung durch den Client. Dies kann je nach POP3-Server in drei unterschiedlichen Formen erfolgen:
a) **USER username**
   **Pass geheim**
b) **APOP username digest**
c) gemäß RFC 1734 (POP3 AUTHentication command).

Die Methode a ist die eigentliche hier dargestellte Standardmethode, die jedoch durch die unverschlüsselte Übertragung des Passworts relativ unsicher ist und daher in der Regel durch die ebenfalls in der RFC 1939 beschriebene Methode APOP ersetzt wird.

Nach erfolgreicher Identifizierung geht der Server in den **"Transaction state".**

Als nächste Aktion sendet der Client den Befehl **"LIST",** mit dem er Informationen über aktuell vorliegende Nachrichten anfordert. Falls Nachrichten vorliegen, antwortet der Server mit:
**+OK 2 messages (280 octets)**
**1 120**
**2 160**
**.**

Falls keine Nachrichten vorliegen, antwortet der Server zum Beispiel mit:
**+OK**
**.**

Um nun mehr über diese Nachrichten zu erfahren, kann man mit dem Kommando "TOP <msg-no> <lines>" den Header und die ersten Zeilen einer bestimmten Mail abfragen, indem der Client zum Beispiel folgende Zeile sendet:
**TOP 2 2**

Der Server antwortet mit dem Header der zweiten Message, gefolgt von einer Leerzeile und den ersten 2 Zeilen der Nachricht, zum Beispiel:
**+OK**
**<Header 2. Message>**
**Hallo: Dies ist Zeile 1**
**Dies ist Zeile 2.**
**.**

Der Client beendet eine Session mit **QUIT.** In einer PPP-Session kann die Telekommunikationsanlage nacheinander für mehrere Clients die aktuell vorliegenden Nachrichten abfragen.

## Patentansprüche

1. Telekommunikationsanlage (1) mit:
mindestens einem Anschluss an mindestens ein externes Telekommunikationsnetz (4) und mehreren mittelbar oder unmittelbar untereinander verbundenen, internen Telekommunikationsendgeräten (2.1-2.4), die zumindest teilweise über eine einzeilige oder mehrzeilige Anzeigevorrichtung (6.1-6.4) zumindest für geschriebenen Text verfügen, einer Einwahlvorrichtung in das mindestens eine externe Telekommunikationsnetz und
mindestens einer Recheneinheit mit mindestens einem Datenspeicher, wobei in der Telekommunikationsanlage (1) Mittel vorgesehen sind, die:
selbständig eine Verbindung zu einem, mit dem mindestens einen externen Telekommunikationsnetz verbundenen, Mailserver aufbauen,
abfragen, ob eine E-mail für mindestens einen Teilnehmer vorliegt und im Fall des Vorliegens zumindest einen Teil des Inhalts der E-mail abholt,
dem Teilnehmer, dessen E-mail vorliegt, vom Vorliegen der E-mail benachrichtigt und gegebenenfalls den abgeholten Teil der E-mail(s) auf der Anzeigevorrichtung (Display) (6.1-6.4) mindestens eines Telekommunikationsendgerätes anzeigt,
wobei der Datenspeicher eine Liste mit Teilnehmern, ihrer zugehörigen Kennung und gegebenenfalls deren Passwörtern aufweist,
**dadurch gekennzeichnet, dass**
in der Teilnehmerliste zusätzlich eine, den einzelnen Teilnehmern zugeordnete Telekommunikationsendgeräte-Kennung vorhanden ist und Mittel vorgesehen sind, die die Benachrichtigung über das Vorliegen einer E-Mail für diesen Teilnehmer ausschliesslich an das Telekommunikationsendgerät (2.1-2.4) mit dieser Telekommunikationsendgeräte-Kennung vornehmen.

2. Telekommunikationsanlage gemäss dem vorstehenden Anspruch 1, **dadurch gekennzeichnet, dass** die Teilnehmerliste zusätzlich den einzelnen Teilnehmern zugeordnete Kennungen von Mailservern (3) enthält, die die Telekommunikationsanlage (1) entsprechend abfragt.

3. Telekommunikationsanlage gemäss einem der vorstehenden Ansprüche 1-2, **dadurch gekennzeichnet, dass** die Verbindung zwischen Telekommunikationsanlage (1) und Mailserver (3) nach einem PPP (peer to peer protokoll = Punkt zu Punkt-Protokoll) über ISDN entspricht, die Datenübertragung dem TCP/IP (Internet-Protokoll für den Aufbau von Paketverbindungen zu Datenservern) entspricht und die Mailabfrage dem POP3 (post office protocol version 3 = Protokoll nach Internetstandard RFC1939) entspricht.

4. Telekommunikationsanlage gemäss einem der vorstehenden Ansprüche 1-3, **dadurch gekennzeichnet, dass** für die Mailabfrage ein periodisches, vorgegebenes Zeitraster vorgesehen ist.

5. Telekommunikationsanlage gemäss einem der vorstehenden Ansprüche 1-4, **dadurch gekennzeichnet, dass** der an die Telekommunikationsanlage (1) übertragene Teil der E-Mail den Header mit mindestens Mailabsender, Betreff und Mailvorschau enthält.

6. Telekommunikationsanlage gemäss einem der vorstehenden Ansprüche 1-5, **dadurch gekennzeichnet, dass** mindestens ein Mittel zum selbständigen Verbindungsaufbau mit einem Mailserver (3) in mindestens einem Telekommunikationsendgerät (2.1-2.4) der Telekommunikationsanlage (1) integriert ist.

7. Telekommunikationsanlage gemäss einem der vorstehenden Ansprüche 1-6, **dadurch gekennzeichnet, dass** mindestens ein Mittel zum selbständigen Verbindungsaufbau mit einem Mailserver (3) in der Einwahlvorrichtung der Telekommunikationsanlage (1) integriert ist.

8. Verfahren zum Betrieb einer Telekommunikationsanlage, wobei neben den Verbindungs- und Wählfunktionen die folgenden Merkmale vorgesehen sind:
selbständiger Aufbau einer Verbindung über ein externes Telekommunikationsnetz (4) mit einem Mailserver (3),
Abfrage, ob eine E-mail für mindestens einen Teilnehmer vorliegt und im Fall des Vorliegens Abholung zumindest eines Teils des Inhalts einer oder mehrerer E-mail,
Benachrichtigung des Teilnehmers, dessen E-mail vorliegt, über ein Telekommunikationsendgerät (2.1-2.4) und gegebenenfalls
Anzeige des abgeholten Teils der einen oder mehrerer E-mail auf der Anzeigevorrichtung (Display) (6.1-6.4) mindestens eines Telekommunikationsendgerätes (2.1-2.4),
wobei in einem Datenspeicher der Telekommunikationsanlage (1) eine Liste mit Teilnehmern, ihrer zugehörigen Kennung und gegebenenfalls deren Passwörtern angelegt ist und die Abfrage beim Mailserver (3) für die in der Liste aufgenommenen Teilnehmer durchgeführt wird,
**dadurch gekennzeichnet, dass**
in der Teilnehmerliste zusätzlich eine, den einzelnen Teilnehmern zugeordnete Telekommunikationsendgeräte-Kennung geführt wird und die Benachrichtigung über das Vorliegen einer E-Mail für diesen Teilnehmer ausschliesslich an das Telekommunikationsendgerät (2.1-2.4) mit dieser Telekommunikationsendgeräte-Kennung vorgenommen wird.

9. Verfahren gemäss dem vorstehenden Verfahrensanspruch 8, **dadurch gekennzeichnet, dass** in der Teilnehmerliste zusätzlich den einzelnen Teilnehmern zugeordnete Kennungen von Mailservern (3) aufgeführt sind und die Abfrage bei den aufgeführten Mailservern (3) vorgenommen wird.

10. Verfahren gemäss einem der vorstehenden Verfahrensansprüche 8-9, **dadurch gekennzeichnet, dass** die Verbindung zwischen Telekommunikationsanlage (1) und Mailserver (3) nach einem PPP (peer to peer protokoll = Punkt zu Punkt-Protokoll) über ISDN aufgebaut wird, die Datenübertragung dem TCP/IP (Internet-Protokoll für den Aufbau von Paketverbindungen zu Datenservern) durchgeführt wird und die Mailabfrage interaktiv nach dem POP3 (post office protocol version 3 = Protokoll nach Internetstandard RFC1939) durchgeführt wird.

11. Verfahren gemäss einem der vorstehenden Verfahrensansprüche 8-10, **dadurch gekennzeichnet, dass** die Mailabfrage entsprechend einem vorgegebenen, periodischen Zeitraster vorgenommen wird.

12. Verfahren gemäss einem der vorstehenden Verfahrensansprüche 8-11, **dadurch gekennzeichnet, dass** bei der Mailabfrage der an die Telekommunikationsanlage (1) übertragene Teil der E-Mail den Header mit mindestens Mailabsender, Betreff und Mailvorschau enthält.

13. Verfahren gemäss einem der vorstehenden Verfahrensansprüche 8-12, **dadurch gekennzeichnet, dass** der selbständige Verbindungsaufbau mit dem Mailserver (3) durch ein Telekommunikationsendgerät (2.1-2.4) der Telekommunikationsanlage (1) ausgelöst wird.

14. Verfahren gemäss einem der vorstehenden Verfahrensansprüche 8-13, **dadurch gekennzeichnet, dass** der selbständige Verbindungsaufbau mit dem Mailserver (3) durch eine Zentralstelle der Telekommunikationsanlage (1) ausgelöst wird.

15. Verfahren gemäss einem der vorstehenden Verfahrensansprüche 8-14, **dadurch gekennzeichnet, dass** die Benachrichtigung des Teilnehmers akustisch und/oder optisch stattfindet.

## Claims

1. Telecommunication system (1) comprising:
at least one connection to at least one external telecommunication network (4) and a number of internal telecommunication terminals (2.1-2.4) which are indirectly or directly connected to one another and which at least partially have a single-line or multi-line display device (6.1-6.4) at least for written text,
a device for dialing into the at least one external telecommunication network and at least one computing unit having at least one data memory, means being provided in the telecommunication system (1) which:
automatically set up a connection to a mail server connected to the at least one external telecommunication network,
inquire whether there is an e-mail for at least one subscriber and if so fetch at least a part of the content of the e-mail, notify the subscriber whose e-mail is present about the presence of the e-mail and, if necessary, display the fetched part of the e-mail(s) on the display device (6.1-6.4) of at least one telecommunication terminal,
the data memory having a list of subscribers, their associated identifier and, if necessary, their passwords,
**characterized in that**, in the subscriber list, a telecommunication terminal identifier allocated to the individual subscribers is additionally provided and means are provided which perform the notification about the presence of an e-mail for this subscriber exclusively to the telecommunication terminal (2.1-2.4) having this telecommunication terminal identifier.

2. Telecommunication system according to the preceding Claim 1, **characterized in that** the subscriber list additionally contains identifiers of mail servers (3), allocated to the individual subscribers, which are correspondingly queried by the telecommunication system (1).

3. Telecommunication system according to one of the preceding Claims 1-2, **characterized in that** the connection between telecommunication system (1) and mail server (3) corresponds to a PPP (peer to peer protocol) via ISDN, the data transmission corresponds to the TCP/IP (transmission control protocol/Internet protocol for setting up packet connections to data servers) and the mail inquiry corresponds to the POP3 (post office protocol version 3/protocol according to Internet standard RFC1939).

4. Telecommunication system according to one of the preceding Claims 1-3, **characterized in that** a periodic predetermined timing pattern is provided for the mail inquiry.

5. Telecommunication system according to one of the preceding Claims 1-4, **characterized in that** the part of the e-mail transmitted to the telecommunication system (1) contains the header with at least mail originator, subject and mail preview.

6. Telecommunication system according to one of the preceding Claims 1-5, **characterized in that** at least one means for independent connection set-up to a mail server (3) is integrated into at least one telecommunication terminal (2.1-2.4) of the telecommunication system (1).

7. Telecommunication system according to one of the preceding Claims 1-6, **characterized in that** at least one means for independent connection set-up to a mail server (3) is integrated in the dialing device of the telecommunication system (1).

8. Method for operating a telecommunication system, the following features being provided in addition to the connection and dialing functions:
independent setting-up of a connection via an external telecommunication network (4) to a mail server (3),
inquiring whether there is an e-mail for at least one subscriber and if so fetching of at least a part of the content of one or more e-mails,
notifying the subscriber whose e-mail is present via a telecommunication terminal (2.1-2.4) and, if necessary,
displaying the fetched part of the one or more e-mail(s) on the display device (6.1-6.4) of at least one telecommunication terminal (2.1-2.4),
a list of subscribers, their associated identifier and, if necessary, their passwords being set up in a data memory of the telecommunication system (1) and the inquiry at the mail server (3) being carried out for the subscribers entered in the list,
**characterized in that**, in the subscriber list, a telecommunication terminal identifier allocated to the individual subscribers is additionally kept and the notification about the presence of an e-mail for this subscriber is performed exclusively to the telecommunication terminal (2.1-2.4) having this telecommunication terminal identifier.

9. Method according to the preceding Method Claim 8, **characterized in that** identifiers of mail servers (3) allocated to the individual subscribers are additionally listed in the subscriber list and the inquiry is performed at the mail servers (3) listed.

10. Method according to one of the preceding Method Claims 8-9, **characterized in that** the connection between telecommunication system (1) and mail server (3) is set up in accordance with a PPP (peer to peer protocol) via ISDN, the data transmission is performed in accordance with the TCP/IP (transmission control protocol/Internet protocol for setting up packet connections to data servers) and the mail inquiry is performed interactively in accordance with the POP3 (post office protocol version 3/protocol according to Internet standard RFC1939).

11. Method according to one of the preceding Method Claims 8-10, **characterized in that** the mail inquiry is performed in accordance with a predetermined periodic timing pattern.

12. Method according to one of the preceding Method Claims 8-11, **characterized in that**, during the mail inquiry, the part of the e-mail transmitted to the telecommunication system (1) contains the header with at least mail originator, subject and mail preview.

13. Method according to one of the preceding Method Claims 8-12, **characterized in that** the independent connection set-up to the mail server (3) is triggered by a telecommunication terminal (2.1-2.4) of the telecommunication system (1).

14. Method according to one of the preceding Method Claims 8-13, **characterized in that** the independent connection set-up to the mail server (3) is triggered by a central station of the telecommunication system (1).

15. Method according to one of the preceding Method Claims 8-14, **characterized in that** the subscriber is notified aurally and/or visually.

## Revendications

1. Installation de télécommunication (1) ayant :
au moins une connexion à au moins un réseau de télécommunication externe (4) et plusieurs terminaux de télécommunication internes (2.1 à 2.4) qui sont reliés entre eux indirectement ou directement et qui disposent au moins en partie d'un dispositif d'affichage (6.1 à 6.4) à une ou plusieurs lignes au moins pour du texte écrit,
un dispositif de sélection dans le ou les réseaux de télécommunication externe et au moins une unité de calcul comportant au moins une mémoire de données,
des moyens étant prévus dans l'installation de télécommunication (1) pour :
- établir indépendamment une liaison vers un serveur de courrier électronique relié au réseau de télécommunication externe ou aux réseaux de télécommunication externes,
- interroger pour savoir si un courriel existe pour au moins un abonné et, si oui, aller chercher au moins une partie du contenu des courriels,
- notifier à l'abonné pour lequel il existe un courriel l'existence desdits courriels et, le cas échéant, afficher la partie récupérée du ou des courriels sur le dispositif d'affichage (display) (6.1 à 6.4) d'au moins un terminal de télécommunication,
la mémoire de données comportant une liste contenant des abonnés, leur identificateur associé et éventuellement leurs mots de passe,
**caractérisée par le fait qu'**il y a en plus dans la liste d'abonnés un identificateur de terminal de télécommunication associé aux différents abonnés et qu'il est prévu des moyens pour effectuer la notification de l'existence d'un courriel pour cet abonné exclusivement sur le terminal de télécommunication (2.1 à 2.4) ayant cet identificateur de terminal de télécommunication.

2. Installation de télécommunication selon la revendication précédente 1, **caractérisée par le fait que** la liste d'abonnés contient en plus des identificateurs, associés aux différents abonnés, de serveurs de courrier électronique (3) que l'installation de télécommunication (1) interroge de manière appropriée.

3. Installation de télécommunication selon l'une des revendications précédentes 1 et 2, **caractérisée par le fait que** la liaison entre installation de télécommunication (1) et serveur de courrier électronique (3) s'effectue selon un PPP (peer to peer protocol = protocole point à point) via le RNIS, que la transmission de données s'effectue selon TCP / IP (protocole Internet pour l'établissement de liaisons par paquets vers des serveurs de données) et que l'interrogation de courrier électronique s'effectue selon POP3 (post office protocol version 3 = protocole selon la norme Internet RFC1939).

4. Installation de télécommunication selon l'une des revendications précédentes 1 à 3, **caractérisée par le fait qu'**un cadre temporel périodique prédéterminé est prévu pour l'interrogation de courrier électronique.

5. Installation de télécommunication selon l'une des revendications précédentes 1 à 4, **caractérisée par le fait que** la partie des courriels qui est transmise à l'installation de télécommunication (1) contient l'entête avec au moins l'expéditeur du courriel, l'objet et un aperçu du courriel.

6. Installation de télécommunication selon l'une des revendications précédentes 1 à 5, **caractérisée par le fait qu'**au moins un moyen pour l'établissement de liaison indépendant avec un serveur de courrier électronique (3) est intégré dans au moins un terminal de télécommunication (2.1 à 2.4) de l'installation de télécommunication (1).

7. Installation de télécommunication selon l'une des revendications précédentes 1 à 6, **caractérisée par le fait qu'**au moins un moyen pour l'établissement de liaison indépendant avec un serveur de courrier électronique (3) est intégré dans le dispositif de sélection de l'installation de télécommunication (1).

8. Procédé d'exploitation d'une installation de télécommunication, dans lequel on prévoit en plus des fonctions de liaison et de numérotation les caractéristiques suivantes :
- établissement indépendant d'une liaison vers un serveur de courrier électronique (3) par l'intermédiaire d'un réseau de télécommunication externe (4),
- interrogation pour savoir si un courriel existe pour au moins un abonné et, si oui, récupération d'au moins une partie du contenu d'un ou plusieurs courriels,
- notification à l'abonné pour lequel il existe un courriel par l'intermédiaire d'un terminal de télécommunication (2.1 à 2.4) et, le cas échéant,
- affichage de la partie récupérée du ou des courriels sur le dispositif d'affichage (display) (6.1 à 6.4) d'au moins un terminal de télécommunication (2.1 à 2.4),
une liste avec des abonnés, leur identificateur associé et éventuellement leurs mots de passe étant mise en place dans une mémoire de données de l'installation de télécommunication (1) et l'interrogation auprès du serveur de courrier électronique (3) étant effectuée pour les abonnés enregistrés dans la liste,
**caractérisé par le fait que** l'on gère en plus dans la liste d'abonnés un identificateur de terminal de télécommunication associé aux différents abonnés et que l'on effectue la notification de l'existence d'un courriel pour cet abonné exclusivement sur le terminal de télécommunication (2.1 à 2.4) ayant cet identificateur de terminal de télécommunication.

9. Procédé selon la revendication de procédé précédente 8, **caractérisé par le fait que** l'on note en plus dans la liste d'abonnés des identificateurs, associés aux différents abonnés, de serveurs de courrier électronique (3) et que l'on effectue l'interrogation auprès des serveurs de courrier électronique (3) notés.

10. Procédé selon l'une des revendications de procédé précédentes 8 et 9, **caractérisé par le fait que** la liaison entre installation de télécommunication (1) et serveur de courrier électronique (3) est établie selon un PPP (peer to peer protocol = protocole point à point) via le RNIS, que la transmission de données s'effectue selon TCP / IP (protocole Internet pour l'établissement de liaisons par paquets vers des serveurs de données) et que l'interrogation de courrier électronique s'effectue de manière interactive selon POP3 (post office protocol version 3 = protocole selon la norme Internet RFC1939).

11. Procédé selon l'une des revendications de procédé précédentes 8 à 10, **caractérisé par le fait que** l'interrogation de courrier électronique s'effectue dans un cadre temporel périodique prédéterminé.

12. Procédé selon l'une des revendications de procédé précédentes 8 à 11, **caractérisé par le fait que**, lors de l'interrogation de courrier électronique, la partie des courriels qui est transmise à l'installation de télécommunication (1) contient l'en-tête avec au moins l'expéditeur du courriel, l'objet et un aperçu du courriel.

13. Procédé selon l'une des revendications de procédé précédentes 8 à 12, **caractérisé par le fait que** l'établissement de liaison indépendant avec le serveur de courrier électronique (3) est déclenché par un terminal de télécommunication (2.1 à 2.4) de l'installation de télécommunication (1).

14. Procédé selon l'une des revendications de procédé précédentes 8 à 13, **caractérisé par le fait que** l'établissement de liaison indépendant avec le serveur de courrier électronique (3) est déclenché par un poste central de l'installation de télécommunication (1).

15. Procédé selon l'une des revendications de procédé précédentes 8 à 14, **caractérisé par le fait que** la notification de l'abonné s'effectue de façon sonore et/ou visuelle.
